(19) **Europäisches Patentamt / European Patent Office / Office européen des brevets**

(11) **EP 4 574 382 A1**

(12) **EUROPEAN PATENT APPLICATION**
published in accordance with Art. 153(4) EPC

(43) Date of publication:
**25.06.2025 Bulletin 2025/26**

(21) Application number: **23854918.2**

(22) Date of filing: **16.08.2023**

(51) International Patent Classification (IPC):
*B29C 33/72* (2006.01)    *B29C 45/17* (2006.01)
*B29C 48/27* (2019.01)    *C08L 23/06* (2006.01)
*C08L 23/12* (2006.01)    *C08L 91/06* (2006.01)
*C08L 101/00* (2006.01)    *C11D 7/22* (2006.01)

(52) Cooperative Patent Classification (CPC):
B29C 33/72; B29C 45/17; B29C 48/27;
C08L 23/06; C08L 23/12; C08L 91/06;
C08L 101/00; C11D 7/22

(86) International application number:
**PCT/JP2023/029645**

(87) International publication number:
**WO 2024/038884 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.08.2022 JP 2022131350
15.03.2023 JP 2023041384**

(71) Applicant: **Asahi Kasei Kabushiki Kaisha
Tokyo 1000006 (JP)**

(72) Inventors:
• **MASAKI Daisuke
Tokyo 100-0006 (JP)**
• **KUROSU Yuki
Tokyo 100-0006 (JP)**

(74) Representative: **D Young & Co LLP
3 Noble Street
London EC2V 7BQ (GB)**

(54) **RESIN COMPOSITION FOR CLEANING MOLDING MACHINE**

(57) A resin composition for cleaning molding machines that achieves both high cleaning power for the material mold-processed before cleaning and easy replacement to the material to be mold-processed after cleaning, improves stable raw material feedability, has metered purging suitability, and has improved workability by suppressing spurt and emission of fume from a molding machine during the cleaning process is provided. To achieve the object, the present disclosure is a resin composition for cleaning molding machines including a thermoplastic resin (A), a synthetic wax (B), and a polyolefin-based resin (C), wherein an absolute value of a difference between solubility parameters of (A) and (B) is 2.0 $(cal/cm^3)^{1/2}$ or more and 7.0 $(cal/cm^3)^{1/2}$ or less, a compounding amount of (C) is more than 0.1 mass% and less than 10 mass%, and a glass transition temperature of (C) is higher than - 150 °C and lower than 40 °C.

**Description**

TECHNICAL FIELD

The present disclosure relates to a resin composition for cleaning molding machines.

BACKGROUND

Resin molding processing machines such as an extruder and an injection molding machine are commonly used for processes such as coloring, compounding and molding of resins. With this type of processing machine, degradation products (for example, thermal decomposition products, carbonized products, char, etc.) generated from a resin or the like, as well as resins and additives such as dyes and pigments processed in a prescribed molding process, remain in the molding processing machine after the process. If these residues are left, they may, for example, mix with the materials for subsequent processes and cause appearance defects in a resulting product. Particularly in the case of molding a transparent resin, even only a small amount of mixed residue would cause notable appearance defects in a resulting product because the residues lower the transparency of the resulting product or make black spots as foreign matters that are visually recognized with ease. Therefore, it is desired to completely remove residues from inside a molding machine.
Conventionally, various methods have been employed to remove residues from a molding processing machine. Examples include (1) a method of manually disassembling and cleaning a molding processing machine, (2) a method of filling a molding processing machine with a molding material used for the subsequent molding without stopping the molding processing machine, thereby gradually discharging residues, and (3) a method of using a purging compound.
The above-mentioned method (1) has a problem in that the method is inefficient because molding processing machines are required to be stopped, and the removal is physically carried out manually, so that molding processing machines tend to be damaged. The above-mentioned method (2) has a problem in that a large amount of a molding material is required for the removal of residues, that it takes time to complete the operation, and that a large amount of waste is generated. Accordingly, in recent years, the above-mentioned method (3) by using a purging compound has been preferentially used because it is excellent in the cleaning power to remove residues in molding processing machines.
Furthermore, the above-mentioned method (3) by using the purging compound tends to result in variations in the degree of cleaning due to the experience and skill of the operator, which can become a burden on the operator during the cleaning process. Therefore, in recent years, molding processing machines have been provided with a feature called metered purging or auto-purging (hereafter referred to as metered purging), which automatically repeats metered injection. This feature is often used in the cleaning process.
The above-mentioned metered purging has become preferably used because it promotes and uniformizes the cleaning effect and simplifies the cleaning process, regardless of the experience or skill of the operator.
For the purpose of enhancing the effect of a purging compound, methods for enhancing the cleaning power of a purging compound have been proposed. For example, PTL 1 discloses a granular mixture for cleaning containing at least two types of granules with different melt flow rates and a lubricant, which has excellent cleaning power and efficient replaceability to subsequent resin compositions.
PTL 2 discloses a resin composition for cleaning containing a thermoplastic resin, a polypropylene resin, and an inorganic filler, which has excellent cleaning effects and workability.
PTL 3 discloses a resin composition for cleaning containing a styrene-based resin, polyalkylene oxide glycol, an alkyl sulfate, and an aliphatic metal salt, which has excellent cleaning power for the previous material and excellent replaceability to the subsequent material.
PTL 4 discloses a purging agent composition for molding machines including a thermoplastic resin, an inorganic filler, and a lubricant, which has excellent cleaning power.
PTL 5 discloses a purging agent for resin molding machines containing a polyolefin resin, an inorganic filler, a surfactant, a polyolefin wax containing polar functional groups, and a fatty acid metal salt, which has excellent cleaning capability against colorants such as dyes and pigments and excellent permeability into the resin molding machines.
PTL 6 discloses a purging agent for molding processing machines containing a polypropylene resin and a surfactant, which has good cleaning capability for molding processing machines and good removability of the residue remaining after cleaning.

CITATION LIST

Patent Literature

PTL 1: JP 2007-246626 A
PTL 2: JP 2017-218540 A
PTL 3: WO00/056514A
PTL 4: JP H06-134770 A
PTL 5: JP S59-124999 A
PTL 6: JP 2018-69473 A
PTL 7: JP 2010-95625 A

SUMMARY

(Technical Problem)

However, upon investigation by the inventors, when the purging agents disclosed in PTLs 1 to 7 are used, the cleaning performance is insufficient, and there is a problem that a large amount of resin is required to replace the molding material used in the previous molding with the purging agent and the purging agent with the molding material used in the subsequent molding. Furthermore, when cleaning engineering plastics, which require a relatively high setting temperature of the molding machine, the resin composition for cleaning cannot be supplied from the raw material hopper to the inside of the cylinder of the molding machine, resulting in failure to feed the raw material, long metering time, or metering failure, making metered purging impossible. Additionally, when highly heat-resistant materials are purged at high temperatures, the cleaning performance is insufficient, requiring a large amount of the resin and time to replace the molding material used in the previous molding with the purging agent and the purging agent with the molding material used in the subsequent molding. Moreover, when the lubricants or surfactants disclosed in PTLs 2, 4, 5, and 6 are blended, there is a problem with workability due to the risk of burns caused by spurt of the purging agent or emission of fume from the molding machine during the cleaning operation.

Therefore, purging agents are required to have high cleaning power for the materials mold before cleaning, easy replacement to the material to be mold-processed after cleaning, stable raw material feedability regardless of the cleaning temperature to allow for metered purging, and suppress risks of burns caused by spurt and emission of fume for safe use.

Therefore, an object of the present disclosure is to provide a resin composition for cleaning molding machines that achieves both high cleaning power for the material mold-processed before cleaning and easy replacement to the material to be mold-processed after cleaning, has stable raw material feedability regardless of the cleaning temperature to allow for metered purging, and has improved workability by suppressing spurt and emission of fume from the molding machine during the cleaning process.

The inventors, after intensive investigation to solve the above problem, focused on the rheological properties of thermoplastic resins and synthetic waxes. We found that by formulating a specific resin composition, it is possible to achieve high cleaning power for the material mold-processed before cleaning. Additionally, the resin composition for cleaning can be easily replaced with the material to be mold-processed after cleaning without remaining in the molding machine and can suppress spurt and emission of fume from the molding machine during the cleaning process, thereby improving workability. Furthermore, regarding the raw material feedability, it has been found that by blending a certain thermoplastic resin, the raw material feedability from the hopper to the inside of the cylinder can be improved, leading to the development of the present disclosure.

Specifically, the present disclosure is as follows:

[1] A resin composition for cleaning molding machines comprising at least a thermoplastic resin (A), a synthetic wax (B), and a polyolefin-based resin (C), wherein an absolute value of a difference between a solubility parameter $\delta_{(A)}$ of the thermoplastic resin (A) and a solubility parameter $\delta_{(B)}$ of the synthetic wax (B) is 2.0 $(cal/cm^3)^{1/2}$ or more and 7.0 $(cal/cm^3)^{1/2}$ or less, a compounding amount of the polyolefin-based resin (C) is more than 0.1 mass% and less than 10 mass%, and a glass transition temperature of the polyolefin-based resin (C) is higher than -150 °C and lower than 40 °C.

[2] The resin composition for cleaning molding machines according to [1], wherein the thermoplastic resin (A) is a polycarbonate-based resin.

[3] The resin composition for cleaning molding machines according to [1] or [2], wherein the synthetic wax (B) is a homopolymer polyethylene wax or a homopolymer polypropylene wax.

[4] The resin composition for cleaning molding machines according to any one of [1] to [3], wherein a weight average molecular weight of the synthetic wax (B) is 1000 to 50,000.

[5] The resin composition for cleaning molding machines according to any one of [1] to [4], wherein a content of the synthetic wax (B) is 0.1 to 20 mass%.

[6] The resin composition for cleaning molding machines according to any one of [1] to [5], wherein a relationship among the solubility parameter $\delta_{(A)}$ of the thermoplastic resin (A), the solubility parameter $\delta_{(B)}$ of the synthetic wax (B), and a solubility parameter $\delta_{(C)}$ of the olefin-based resin (C) is $\delta_{(A)} > \delta_{(C)} \geq \delta_{(B)}$.

[7] The resin composition for cleaning molding machines according to any one of [1] to [6], wherein an absolute value of a difference between the solubility parameter $\delta_{(A)}$ of the thermoplastic resin (A) and the solubility parameter $\delta_{(C)}$ of the polyolefin-based resin (C) is 2.0 $(cal/cm^3)^{1/2}$ or more and 7.0 $(cal/cm^3)^{1/2}$ or less.

[8] The resin composition for cleaning molding machines according to any one of [1] to [7], wherein a slope $\alpha$ determined from a linear approximation line in a scatter diagram graph plotting a sliding velocity $V_s$ (mm/s) and a true shear stress $\tau_{correct}$ (kPa) is 0.10 mm/(s·kPa) or more.

[9] The resin composition for cleaning molding machines according to any one of [1] to [8], wherein a water content measured by the Karl Fischer method is 5000 ppm or less.

[10] The resin composition for cleaning molding machines according to any one of [1] to [9], wherein a heating weight loss rate at 300 °C is 3 mass% or less.

(Advantageous Effect)

According to the present disclosure, it is possible to provide a resin composition for cleaning molding machines that achieves both high cleaning power for the material mold-processed before cleaning and easy replacement to the material to be mold-processed after cleaning regardless of the cleaning temperature, suppresses spurt and emission of fume from the molding machine during the cleaning process to improve workability, and further has excellent raw material feeding suitability and metered purging suitability.

DETAILED DESCRIPTION

The following provides a detailed description of an embodiment of the present disclosure (hereinafter, referred to as the "present embodiment"). Note that the present disclosure is not limited to the following present embodiment and may be implemented with various alterations that are within the essential scope thereof.

[Resin composition for cleaning molding machines]

A resin composition for cleaning molding machines of the present embodiment (hereinafter also referred to as "resin composition for cleaning") contains at least a thermoplastic resin (A), a synthetic wax (B), and a polyolefin-based resin (C), wherein an absolute value of a difference between a solubility parameter $\delta_{(A)}$ of the thermoplastic resin (A) and a solubility parameter $\delta_{(B)}$ of the synthetic wax (B) is 2.0 $(cal/cm^3)^{1/2}$ or more and 7.0 $(cal/cm^3)^{1/2}$ or less, and a compounding amount of the polyolefin-based resin (C) is more than 0.1 mass% and less than 10 mass%.

(Thermoplastic resin (A))

The thermoplastic resin (A) used in the present embodiment is any thermoplastic resin generally used for injection molding, extrusion molding, or the like, that can be widely used as long as the absolute value of the difference ($|\delta_{(A)} - \delta_{(B)}|$) between the solubility parameter $\delta_{(A)}$ of the thermoplastic resin (A) and the solubility parameter $\delta_{(B)}$ of the synthetic wax (B) described below is 2.0 $(cal/cm^3)^{1/2}$ or more, and two or more resins can be used simultaneously.

Specific examples of the thermoplastic resin (A) include polyolefin-based resins such as styrene-based resins, e.g., polystyrene, polyethylene-based resins, e.g., polyethylene, polypropylene-based resins, e.g., polypropylene, polybutene-based resins, methacrylic acid ester-based resins such as polymethyl methacrylate, polyvinyl chloride, polyamide-based resins, polyester-based resins, and polycarbonate-based resins. Of these, styrene-based resins and polyester-based resins are preferred.

A styrene-based resin described above refers to polystyrene or a copolymer of styrene and one or more other monomers having a styrene content of 50 mass% or more.

Examples of other monomers copolymerized with styrene include acrylonitrile and butadiene, for example.

Specific examples of the styrene-based resin include polystyrene, styrene-acrylonitrile copolymers, and styrene-butadiene-acrylonitrile copolymers. Of these, styrene and styrene-acrylonitrile copolymers are preferred, and styrene-acrylonitrile copolymers with an acrylonitrile content of 5 mass% or more and less than 50 mass% are particularly preferred because they have excellent cleaning power for the material mold-processed before cleaning and easy replacement to the material to be mold-processed after cleaning.

Examples of the methacrylic acid ester-based resins include polymethyl methacrylate, polyethyl methacrylate, polypropyl methacrylate, and polybutyl methacrylate.

Examples of the polyamide-based resin include aliphatic polyamides such as polyamide 4 (poly $\alpha$-pyrrolidone), polyamide 6 (polycaproamide), polyamide 11 (polyundecanamide), polyamide 12 (polydodecanamide), polyamide 46 (polytetramethylene adipamide), polyamide 66 (polyhexamethylene adipamide), polyamide 610, and polyamide 612;

semi-aromatic polyamides such as polyamide 6T (polyhexamethylene terephthalamide), polyamide 9T (polynonane methylene terephthalamide), and polyamide 6I (polyhexamethylene isophthalamide); and copolymerized polyamides containing these as constituents, for example.

Examples of copolymerized polyamides include, but are not limited to, a copolymer of hexamethylene adipamide and hexamethylene terephthalamide, a copolymer of hexamethylene adipamide and hexamethylene isophthalamide, and a copolymer of hexamethylene terephthalamide and 2-methylpentanediamine terephthalamide, for example.

A polyester-based resin described above is a copolymer having an ester bond in a repeating unit of the main chain, and polyethylene terephthalate obtained through polycondensation of terephthalic acid and ethylene glycol or the like can be suitably used.

A polycarbonate-based resin described above is a copolymer having a carbonic acid ester bond in a repeating unit of the main chain, and examples thereof include copolymers obtained by a method of reacting an aromatic dihydroxy compound with a carbonate precursor; an interfacial polymerization method (e.g., phosgene method) of reacting an aromatic dihydroxy compound with a carbonate precursor (e.g., phosgene) in the presence of a water solution of sodium hydroxide and a methylene chloride solvent; a transesterification method (e.g., melt method) of reacting an aromatic dihydroxy compound with a diester carbonate (e.g., diphenyl carbonate); a method of carrying out solid-phase polymerization of a crystallized carbonate prepolymer obtained by the phosgene method or the melt method, and the like. Polycarbonate-based resins are preferred because they provide high cleaning power for heat-resistant materials at high temperatures (e.g., 300 °C or higher) such as cleaning super engineering plastics.

The weight average molecular weight of the thermoplastic resin (A) is not particularly limited, but is preferably 100,000 to 400,000, more preferably 110,000 to 350,000, and even more preferably 120,000 to 300,000.

In the present embodiment, a weight average molecular weight is the value measured by gel permeation chromatography (GPC) or other methods. The weight average molecular weight can be specifically measured, for example, by the qualitative quantitative analysis method described in the Examples section to be described below, or by other methods.

Furthermore, the melt flow rate (MFR) of the thermoplastic resin (A) is preferably 0.5 g/10 min or more for ease of use, more preferably 40 g/10 min or less for the effectiveness of cleaning, and even more preferably 0.5 g/10 min or more and 30 g/10 min or less.

Note that the melt flow rate in this specification refers to the value measured in accordance with ASTM D1238. It is the value measured under the conditions of a measurement temperature of 220 °C and a load of 10 kgf if the thermoplastic resin (A) is an amorphous resin or a crystalline resin with a melting point of 220 °C or lower (e.g., AS resin). Or, if the melting point of the thermoplastic resin (A) exceeds 220 °C, it is the value measured under the standard measurement conditions for that resin. For example, in the case of polyamide 66 that has a melting point of about 265 °C, it is the value measured at a measurement temperature of 275 °C under a load of 5 kgf. In the case of PET that has a melting point of about 255 °C, it is the value measured at a temperature of 285 °C under a load of 2.16 kgf.

The content of the thermoplastic resin (A) is preferably in the range of 1 to 99 mass%, more preferably in the range of 5 to 98 mass%, and even more preferably in the range of 10 to 97 mass% per 100 mass% of the resin composition for cleaning.

Note that the content of the thermoplastic resin (A) can be measured, for example, by GPC or other methods, and specifically can be measured, for example, by the qualitative quantitative analysis method described in the Examples section to be described below or by other methods.

(Synthetic wax (B))

Generally, a wax is defined as a solid or semi-solid substance at room temperature, which has a melting point of 40 °C or higher, melts without decomposing when heated, and has low viscosity. They are also made of various raw materials and can be broadly classified into natural waxes, semisynthetic waxes, and synthetic waxes.

In the present embodiment, synthetic wax is used from the viewpoint of cleaning workability to suppress the spurt of the resin composition for cleaning and emission of fume from the molding machine.

As the synthetic wax (B) of the present embodiment, synthetic waxes generally used for injection molding, extrusion molding, or the like can be widely used, and two or more synthetic waxes may be used simultaneously.

Specific examples of the synthetic wax (B) include polyethylene waxes and polypropylene waxes, which are homopolymers, ethylene vinyl acetate waxes and ethylene acrylic acid waxes, which are copolymers, and polyolefin waxes containing polar functional groups. From the viewpoint of suppressing spurt and fume emission from molding machines during cleaning operations, homopolymer polyethylene wax or homopolymer polypropylene wax that is not hygroscopic and has good thermal stability is preferred.

The molecular weight of the synthetic wax (B) in terms of the weight average molecular weight is preferably 1,000 to 60,000, more preferably 3,000 to 55,000, and even more preferably 5,000 to 50,000.

The melting point of the synthetic wax (B) is preferably 100 °C to 165 °C, more preferably 102 °C to 163°C, and even more preferably 105 °C to 160 °C.

The type of the synthetic wax (B) is not particularly limited, but those with a molecular weight in terms of the weight average molecular weight of 5,000 to 50,000 and a melting point of 105 to 160 °C are most likely to provide a cleaning effect.

Note that the weight average molecular weight of the synthetic wax (B) can be measured, for example, by GPC or other methods, and specifically can be measured, for example, by the qualitative quantitative analysis method described in the Examples section to be described below or by other methods.

The content of the synthetic wax (B) is 0.1 mass% or more and 20 mass% or less, preferably 0.3 mass% or more and 15 mass%, more preferably 1.0 mass% or more and 10 mass% or less, per 100 mass% of the resin composition for cleaning. If the content of the synthetic wax (B) is less than 0.1 mass%, the bleed out of the synthetic wax (B) is insufficient and the cleaning effect is difficult to be exhibited. On the other hand, a content of the synthetic wax (B) exceeding 20 mass% is unsuitable because excessive bleed-out causes poor screw feeding when the resin composition for cleaning is fed into the molding machine.

Note that the content of the synthetic wax (B) can be measured, for example, by GPC or other methods, and specifically can be measured, for example, by the qualitative quantitative analysis method described in the Examples section to be described below or by other methods.

(Polyolefin-based resin (C))

The polyolefin-based resin (C) used in the present embodiment is preferably a polyethylene-based resin, a polypropylene-based resin, or a polybutene-based resin. Here, a polyethylene-based resin refers to a homopolymer of ethylene or a copolymer of ethylene and one or more other monomers having an ethylene content of 50 mass% or more. Further, a polypropylene-based resin refers to a homopolymer of propylene or a copolymer of propylene and one or more other monomers having a propylene content of 50 mass% or more. Furthermore, a polybutene-based resin refers to a homopolymer of butene or a copolymer of butene and one or more other monomers having a butene content of 50 mass% or more.

Examples of the above-described polyethylene-based resin include polyethylene, and an ethylene-$\alpha$-olefin copolymer, specifically high-density polyethylene (HDPE), low-density polyethylene (LDPE), linear low-density polyethylene (LLDPE), linear ultra-low-density polyethylene (VLDPE, ULDPE), and ultra-high molecular weight polyethylene (UHMWPE).

The above-described ethylene-$\alpha$-olefin copolymers is preferably a copolymer composed of ethylene and at least one selected from $\alpha$-olefins having a carbon number of 3 to 20, and more preferably a copolymer composed of ethylene and at least one selected from $\alpha$-olefins having a carbon number of 3 to 12. Examples of the $\alpha$-olefin include propylene, 1-butene, 1-pentene, 1-hexene, 1-octene, 4-methyl-1-pentene, 3-methyl-1-pentene, 1-decene, 1-dodecene, 1-tetradecene, 1-hexadecene, 1-octadecene, and 1-eicosane, and one of these may be used alone or two or more of these may be used in combination.

As the aforementioned ethylene-$\alpha$-olefin copolymer, a copolymer of ethylene and at least one comonomer selected from propylene comonomer, butene comonomer, hexene comonomer, and octene comonomer is commonly and readily available and is preferably used.

The above-described polyethylene-based resin can be polymerized using a well-known catalyst such as a chromium-based catalyst, a Ziegler-based catalyst, or a metallocene-based catalyst. From the viewpoint of the cleaning performance, a chromium-based catalyst having a wide molecular weight distribution, or a Ziegler-based catalyst is preferred, and a chromium-based catalyst having a long chain branch of a molecular chain with a carbon number of 6 or more or a metallocene catalyst is more preferred.

Further, the above-described polyethylene-based resin preferably has an MFR (measured in accordance with ASTM D1238 under conditions of measurement temperature of 190 °C and a load of 2.16 kg) of 0.01 to 30 g/10 min, more preferably 0.05 to 25 g/10 min, and even more preferably 0.1 to 20 g/10 min from the viewpoint of the cleaning performance.

The above-described ultra-high molecular weight polyethylene includes a homopolymer of ethylene or copolymers of ethylene and one or more other monomers with a molecular weight of 1,000,000 or more. Note that copolymers are those having a content of structural units derived from ethylene of 50 mass% or more. The upper limit of the molecular weight is not particularly limited but is preferably 10,000,000 or less for practical use.

Examples of the above-described other monomers are not particularly limited, but include $\alpha$-olefins such as propylene, 1-butene, 1-pentene, 1-hexene, 1-octene, 4-methyl-1-pentene, 3-methyl-1-pentene, 1-decene, 1-dodecene, 1-tetradecene, 1-hexadecene, 1-octadecene, and 1-eicosene; vinyl compounds such as vinyl acetate; aliphatic unsaturated carboxylic acids such as acrylic acid, methacrylic acid, fumaric acid, and maleic acid; and aliphatic unsaturated carboxylic acid esters such as acrylic acid esters, methacrylic acid esters, fumaric acid esters, and maleic acid esters. Of the above-described ultra-high molecular weight polyethylenes, a homopolymer of ethylene is preferred from the viewpoint of thermal stability.

The weight average molecular weight of the polyolefin-based resin (C) can be measured, for example, by GPC or other methods, and specifically can be measured, for example, by the qualitative quantitative analysis method described in the Examples section to be described below or by other methods.

One of the above-described polyethylene-based resins may be used alone or two or more of these may be used in a combination.

Examples of the above-described polypropylene-based resin include polypropylene, a propylene-α-olefin copolymer, and a ternary copolymer of propylene, ethylene, and an α-olefin.

A propylene-α-olefin copolymer described above refers to a copolymer composed of propylene and at least one selected from α-olefins. The above-described propylene-α-olefin copolymer is preferably a copolymer composed of propylene and at least one selected from ethylene and an α-olefin having a carbon number of 4 to 20, and more preferably a copolymer composed of propylene and at least one selected from ethylene and an α-olefin having a carbon number of 4 to 8. Here, examples of the α-olefin having a carbon number of 4 to 20 include 1-butene, 1-pentene, 1-hexene, 1-octene, 4-methyl-1-pentene, 3-methyl-1-pentene, 1-decene, 1-dodecene, 1-tetradecene, 1-hexadecene, 1-octadecene, and 1-eicosane, and one of these may be used alone or two or more of these may be used in combination. These copolymers may be in a form of either a block copolymer or a random copolymer and are preferably random copolymers of propylene and ethylene. As the above-described propylene-α-olefin copolymer, a copolymer of propylene and at least one comonomer selected from an ethylene comonomer, a butene comonomer, a hexene comonomer, and an octene comonomer is generally easily available, and can be suitably used.

As the above-described ternary copolymer of propylene, ethylene, and an α-olefin, a ternary copolymer of propylene, ethylene, and an α-olefin such as butene, hexene, and octene can be suitably used. These ternary copolymers may be in a form of either a block copolymer or a random copolymer, and are preferably random copolymers of propylene, ethylene, and butene.

The above-described polypropylene-based resin may be not only a resin polymerized with a catalyst such as a Ziegler-Natta catalyst but also a resin polymerized with a well-known catalyst such as a metallocene-based catalyst, and syndiotactic polypropylene, isotactic polypropylene, or the like may be used, for example.

The above-described polypropylene-based resin preferably has an MFR (measured in accordance with ASTM D1238 under conditions of measurement temperature of 230 °C and a load of 2.16 kg) of 0.01 to 30.0 g/10 min, more preferably 0.05 to 25 g/10 min, and even more preferably 0.1 to 20 g/10 min from the viewpoint of the cleaning performance.

Because the above-described polybutene-based resin is particularly excellent in compatibility with polypropylene-based resins, the polybutene-based resin is preferably used in combination with the above-described polypropylene-based resins for the purpose of adjusting the melt viscosity.

As the above-described polybutene-based resin, a copolymer that is crystalline and is composed of butene and at least one selected from ethylene, propylene, and an olefin-based compound having a carbon number of 5 to 8 can be suitably used.

The glass transition temperature can be measured by DSC, and specifically can be measured by the method described in the Examples section to be described below. Furthermore, the glass transition temperature is the value measured according to ASTM D-3418 and can be measured by the midpoint method. If there are multiple glass transition temperatures, such as in the case of copolymers, the transition temperature with the largest baseline shift is used as the glass transition temperature.

The content of the above-described polyolefin-based resin (C) is preferably more than 0.1 mass% and less than 10 mass%, more preferably 0.2 mass% or more and 9 mass% or less, and even more preferably 0.3 mass% or more and 8 mass% or less, per 100 mass% of the resin composition for cleaning. A content of the polyolefin-based resin (C) of less than 0.1 mass% is unsuitable because it is difficult to achieve the effect of improving raw material feeding. On the other hand, if the content of the polyolefin-based resin (C) is 10 mass% or more, the effect of improving raw material feeding is good, but the polyolefin-based resin (C) per se tends to remain in the molding machine, making it unsuitable because its replaceability to the material to be mold-processed after cleaning reduces.

Note that the content of the polyolefin-based resin (C) can be measured, for example, by GPC or other methods, and specifically can be measured, for example, by the qualitative quantitative analysis method described in the Examples section to be described below or by other methods.

The melting point of the above-described polyolefin-based resin (C) is preferably 80 °C or higher and 260 °C or lower, more preferably 90 °C or higher and 250 °C or lower, and even more preferably 100 °C or higher and 240 °C or lower, from the viewpoint of workability and ease of procurement of the raw material. The reason for the above effect is not necessarily clear, but if the melting point is less than 80 °C, workability becomes poor because the product tends to become sticky and adhere easily to metals such as cylinders and screws. A melting point exceeding 260 °C is unsuitable because the material becomes difficult to obtain.

The melting point can be measured by DSC, and specifically can be measured by the method described in the Examples section to be described below. Furthermore, the melting point is the peak value measured in accordance with JIS K-7210. In the case of copolymers or the like with multiple melting points, the highest peak value is used as the melting point.

(Additive)

Additives such as lubricants other than the above-described synthetic wax (B), surfactants, and antioxidants may be added to the resin composition for cleaning of the present embodiment to the extent that the inherent properties thereof are not impaired, and the addition to the resin may be performed by known methods so that the effects of each additive can be exhibited.

Additives may be used alone or in a combination of two or more.

The content of additives is preferably 10 mass% or less per 100 mass% of the resin composition for cleaning in view of production stability.

Additives will be described below.

(Lubricant)

Examples of a lubricant other than the synthetic wax (B) include organic acids and organic acid derivatives such as an organic acid metal salt, an organic acid amide, and an organic acid ester, various ester waxes, fluorinated resins, and mineral oils, but are not particularly limited thereto.

Lubricants may be used alone or in a combination of two or more.

Examples of the above-described organic acid include a saturated fatty acid having a carbon number of 9 to 28, an unsaturated fatty acid having a carbon number of 9 to 28, or a benzoic acid.

The metal salt in the above-described organic acid metal salt is not particularly limited, and examples thereof include sodium, potassium, lithium, cesium, magnesium, calcium, aluminum, zinc, iron, cobalt, and barium salts.

Examples of the hydrocarbon moiety in the above-described organic acid metal salt include saturated fatty acids having a carbon number of 9 to 28, unsaturated fatty acids having a carbon number of 9 to 28, and benzoic acid, as in the case of the organic acids mentioned above.

Examples of the above-described organic acid amide include saturated fatty acid amides, unsaturated fatty acid amides, saturated fatty acid bisamides, and unsaturated fatty acid bisamides, having a carbon number of 9 to 28.

Examples of the above-described organic acid ester and ester wax include saturated fatty acid esters having a carbon number of 9 to 28, unsaturated fatty acid esters, medium-chain fatty acid triglycerides, and polyol esters such as hydrogenated oils.

Examples of the above-described fluorinated resins include PTFE, PFA, PVDF, PVDF-based copolymers, ETFE, and PFE.

The above-described mineral oil is an oil obtained by refining petroleum, and includes saturated hydrocarbon oils such as naphthenes and isoparaffins, which are also known as mineral oil, lubricating oil, and liquid paraffin.

(Surfactant)

Examples of the above-described surfactant include anionic surfactants, cationic surfactants, nonionic surfactants, and amphoteric surfactants.

Specifically, examples of the anionic surfactants include higher fatty acid alkali salts, alkyl sulfuric acid salts, alkyl sulfonic acid salts, alkyl aryl sulfonic acid salts, and sulfosuccinic acid ester salts.

Specific examples of the cationic surfactants include higher amine halogen acid salts, alkylpyridinium halides, and quaternary ammonium salts.

Specific examples of the nonionic surfactants include polyethylene glycol alkyl ether, polyethylene glycol fatty acid esters, sorbitan fatty acid esters, and fatty acid monoglycerides.

Specific examples of the amphoteric surfactants include amino acids and the like.

One of the above-described surfactantss may be used alone, or two or more of these may be used in combination.

(Antioxidant)

Examples of antioxidants include phenolic, sulfur, phosphorus, amine, hindered phenol, hindered amine, and hydrazine-based antioxidants.

One of the above-described antioxidants may be used alone, or two or more of these may be used in combination.

The resin composition for cleaning of the present embodiment may contain inorganic fillers, inorganic foaming agents, etc., in order to exhibit high cleaning power for the material mold-processed before cleaning. Although the effect of inorganic fillers, etc. on the cleaning power is not necessarily clear, it is considered that they improve the cleaning power through their scrubbing effect on dirt as scrubbing agents.

The total content of inorganic fillers and inorganic foaming agents is preferably 80 mass% or less, more preferably 70 mass% or less, and even more preferably 60 mass% or less per 100 mass% of the resin composition for cleaning from the viewpoint of balancing between cleaning power for the material mold-processed before cleaning and replaceability to the material to be mold-processed after cleaning.

Inorganic fillers and the like are described below.

(Inorganic filler)

In the present embodiment, an inorganic filler is an inorganic compound other than an inorganic foaming agent described below and refers to both a natural product and an artificial synthetic product. Specific examples of such an inorganic compound include talc, mica, wollastonite, zonolite, kaolin clay, montmorillonite, bentonite, sepiolite, imogolite, sericite, lawsonite, smectite, calcium sulfate fibers, calcium carbonate, magnesium carbonate, titanium oxide, aluminum hydroxide, magnesium hydroxide, zeolite, diatomaceous earth, glass powder, glass ball, glass fiber, and shirasu balloon.

The content of the inorganic filler is preferably 80 mass% or less, more preferably 70 mass% or less, and even more preferably 60 mass% or less per 100% of the resin composition for cleaning from the viewpoint of easy replaceability of the inorganic filler with the material to be mold-processed after cleaning. The lower limit of the content of the inorganic filler is not particularly limited.

(Inorganic foaming agent)

In the present embodiment, an inorganic foaming agent refers to an inorganic compound that decomposes to foam, i.e., generates a gas, when being heated. Specific examples of the inorganic foaming agent include inorganic physical foaming agents such as water; and well-known inorganic chemical foaming agents including bicarbonates such as sodium bicarbonate (hereinafter also referred to as "baking soda"), potassium bicarbonate, and ammonium bicarbonate, carbonates such as sodium carbonate and ammonium carbonate, nitrites such as ammonium nitrite, hydrides such as sodium borohydride, azide compounds such as calcium azide, light metals such as magnesium and aluminum, combinations of sodium bicarbonate and acids, combinations of hydrogen peroxide and yeast, and combinations of aluminum powder and acids.

The content of the inorganic foaming agent is preferably 30 mass% or less, more preferably 25 mass% or less, and even more preferably 20 mass% or less per 100 mass% of the resin composition for cleaning. The lower limit of the content of the inorganic foaming agent is not particularly limited.

The high cleaning power for the material mold-processed before cleaning and easy replacement to the material to be mold-processed after cleaning can be achieved by using a combination of the thermoplastic resin (A) and the synthetic wax (B). Although the exact reason for this is not clear, it is assumed that the large polarity difference between the thermoplastic resin (A) and the synthetic wax (B) causes the synthetic wax (B) to bleed out onto the surface of the resin composition for cleaning and promotes the flow of the resin composition for cleaning near the wall surface inside the cylinder of the molding machine, thus producing the cleaning effect.

From the viewpoint of the above-mentioned bleed-out, the absolute value of the difference ($|\delta_{(A)} - \delta_{(B)}|$) between the solubility parameter $\delta_{(A)}$ of the thermoplastic resin (A) and the solubility parameter $\delta_{(B)}$ of the synthetic wax (B) is preferably 2.0 $(cal/cm^3)^{1/2}$ or more, more preferably 2.2 $(cal/cm^3)^{1/2}$ or more, and even more preferably 2.4 $(cal/cm^3)^{1/2}$ or more. The larger the difference in solubility parameters (polarity difference) between the thermoplastic resin (A) and the synthetic wax (B), the better the effects of the cleaning power and easy replacement tend to be. On the other hand, if the absolute value of the difference in solubility parameters exceeds 7.0 $(cal/cm^3)^{1/2}$, the compatibility reduces significantly and the production of the resin composition for cleaning becomes difficult. Therefore, the absolute value is preferably 7.0 $(cal/cm^3)^{1/2}$ or less, more preferably 6.5 $(cal/cm^3)^{1/2}$ or less, and even more preferably 6.0 $(cal/cm^3)^{1/2}$ or less.

Note that the solubility parameter $\delta_{(A)}$ of thermoplastic resin (A), the solubility parameter $\delta_{(B)}$ of the synthetic wax (B), and the solubility parameter $\delta_{(C)}$ of the polyolefin-based resin (C) are calculated from the structural formulas of the thermoplastic resin (A), the synthetic wax (B), and the polyolefin-based resin (C) using the estimation method of Fedors (R. F. Fedors, Polym. Eng. Sci., 14(2), 147-154 (1974), hereinafter simply referred to as "Fedors' literature") from following equation.

Fedors' formula: solubility parameter $\delta \ [(cal/cm^3)^{1/2}] = (E_v/v)^{1/2} = \Delta\Sigma e_i/\Delta\Sigma v_i)^{1/2}$,

$E_v$: the evaporation energy [cal/mol],
v: the molar volume [$cm^3$/mol],
$\Delta e_i$: the evaporation energy of the atom or atomic group of each component [cal/mol], and
$\Delta v_i$: the molar volume of each atom or atomic group of each component [$cm^3$/mol].

In the aforementioned Fedors' literature, the evaporation energy and the molar volume used in the solubility parameter $\delta$ (SP value) calculated by the above formula are the values at 25 °C. The solubility parameters $\delta_{(A)}$ of the thermoplastic resin (A), the solubility parameter $\delta_{(B)}$ of the synthetic wax (B), and the solubility parameter $\delta_{(C)}$ of the polyolefin-based resin (C) shall be values calculated at 25 °C.

Note that the structural formulas of the thermoplastic resin (A), the synthetic wax (B), and the polyolefin-based resin (C) can be determined using conventional structural analysis techniques such as IR, NMR, and mass spectra.

When two or more synthetic waxes are used as the synthetic wax (B), the relationship of the solubility parameters $\delta_{(A)}$, $\delta_{(B)}$, and $\delta_{(C)}$ defined in the present disclosure only needs to be satisfied for at least one component included in the synthetic wax (B). The above-mentioned relationship is satisfied for a component that constitutes preferably 50 mass% or more, more preferably 60 mass% or more of the total amount of the synthetic wax (B). It is particularly preferable that the relationship is satisfied for all components in the synthetic wax (B).

As mentioned above, the synthetic wax (B) is preferably homopolymer polyethylene wax or homopolymer polypropylene wax that is not hygroscopic and has good thermal stability from the viewpoint of suppressing spurt and emission of fume from the molding machine during cleaning operations. On the other hand, polyolefin waxes containing polar functional groups, such as polyethylene waxes containing carboxylic anhydride groups or carbonyl groups and polypropylene waxes containing maleic anhydride groups, are hygroscopic and are prone to spurt out or tend to cause fume from molding machines during cleaning operations.

Although one method to promote the flow of the resin composition for cleaning is by additionally blending a lubricant or surfactant in addition to the above-described synthetic wax (B), organic acid metal salts and organic acid amides have poor thermal stability, and many surfactants have hygroscopic properties. For example, if an ethylene bis-stearate amide that is a saturated fatty acid bisamide or an alkyl sulfonate or sodium stearate that is an anionic activator is included, spurt or fume from the molding machine likely to occur during cleaning operations.

On the other hand, there has been a problem that promoting the flow by imparting lubricity to the synthetic wax (B) tends to cause the resin composition for cleaning to be poorly fed into the cylinder from the material hopper of the molding machine. During the cleaning process called metered purging, poor feeding of the resin composition for cleaning can lengthen the metering time or cause poor metering, resulting in the failure of metered purging. This is due to reduced friction between the bleed-out synthetic wax (B) and the screw or the metal inner wall of the cylinder of the molding machine, which causes poor raw material feeding. It was found that raw material feedability is improved by adding the polyolefin-based resin (C) to the resin composition for cleaning. Although the exact reason is not clear, generally, under the molding conditions for engineering plastics and the like, the ambient temperature under the hopper of the molding machine is often 10 to 40 °C. Therefore, it is considered that when the cleaning resin composition is fed in, the polyolefin-based resin (C) with a glass transition point below 40 °C softens, increasing friction with the metal of the screw and cylinder inner wall, thereby improving the raw material feedability. The glass transition temperature of the polyolefin-based resin (C) is preferably higher than -150 °C for ease of procurement of the raw material, and the glass transition temperature is preferably less than 40 °C, more preferably less than 30 °C, and even more preferably less than 20 °C in order to soften at the atmospheric temperature under the hopper.

In order to achieve both the flow promoting effect of the synthetic wax (B) by imparting lubricity and the friction increasing effect of the polyolefin-based resin (C) by imparting a softening component, it is preferable that the solubility parameters satisfy the solubility parameter $\delta_{(A)}$ of the thermoplastic resin (A) $\delta_{(A)} > \delta_{(C)}$ of the polyolefin-based resin (C) $\geq \delta_{(B)}$ of the thermoplastic resin (B), it is more preferable that $\delta_{(A)} > \delta_{(C)} > \delta_{(B)}$ is satisfied. Alternatively, the relationship of the solubility parameters $\delta_{(A)}$, $\delta_{(B)}$, and $\delta_{(C)}$ is preferably $|\delta_{(A)} - \delta_{(B)}| > |\delta_{(C)} - \delta_{(B)}|$, more preferably $|\delta_{(A)} - \delta_{(B)}| > |\delta_{(C)} - \delta_{(B)}| > 0$.

Furthermore, from the viewpoint of achieving both cleaning performance and metered purging suitability, the polyolefin-based resin (C) and the synthetic wax (B) are preferably incompatible, and the absolute value of the difference ($|\delta_{(C)} - \delta_{(B)}|$) between the solubility parameter $\delta_{(C)}$ of the polyolefin-based resin (C) and the solubility parameter $\delta_{(B)}$ of the synthetic wax (B) is preferably 0.3 $(cal/cm^3)^{1/2}$ or more, more preferably 0.4 $(cal/cm^3)^{1/2}$ or more, and even more preferably 0.5 $(cal/cm^3)^{1/2}$ or more.

From the viewpoint of raw material feedability, the thermoplastic resin (A) and the polyolefin-based resin (C) are preferably incompatible, and the absolute value of the difference ($|\delta_{(A)} - \delta_{(A)}|$) between the solubility parameter $\delta_{(A)}$ of the thermoplastic resin (A) and the solubility parameter $\delta_{(C)}$ of the polyolefin-based resin (C) is preferably 2.0 $(cal/cm^3)^{1/2}$ or more, more preferably 2.2 $(cal/cm^3)^{1/2}$ or more, and even more preferably 2.4 $(cal/cm^3)^{1/2}$ or more. When the difference in solubility parameters (polarity difference) between the thermoplastic resin (A) and the polyolefin-based resin (C) is within the above range, the effect of raw material feedability tends to be excellent. On the other hand, if the absolute value of the difference in solubility parameters exceeds 7.0 $(cal/cm^3)^{1/2}$, the compatibility reduces significantly and the production of the resin composition for cleaning becomes difficult. Therefore, the absolute value is preferably 7.0 $(cal/cm^3)^{1/2}$ or less, more preferably 6.5 $(cal/cm^3)^{1/2}$ or less, and even more preferably 6.0 $(cal/cm^3)^{1/2}$ or less.

When the combination of the thermoplastic resin (A) and the synthetic wax (B) in the resin composition for cleaning of the present embodiment allows the slope $\alpha$ determined from the linear approximation line in a scatter diagram graph plotting the wall sliding velocity $V_s$ (mm/s) on the Y axis and the true shear stress $\tau_{correct}$ (kPa) on the X axis to be controlled to 0.10 mm/(s·kPa), it becomes even easier to achieve both high cleaning power for the material mold-processed before cleaning and easy replacement to the material to be mold-processed after cleaning. The slope $\alpha$ is more preferably controlled to be 0.13 mm/(s·kPa) or more, and even more preferably controlled to be 0.16 mm/(s·kPa) or more. Although the exact reason for this is not clear, it is known that the flow velocity of a Newtonian fluid is slower near the wall surface than inside the circular tube as Newton's viscosity law, and it is assumed that the resin composition for cleaning of the present embodiment is promoted to flow near the wall surface where the flow velocity is slow and replacement is considered difficult, resulting in high cleaning power for the material mold-processed before cleaning and easy replacement to the material to be molded-processed after cleaning. The upper limit of the slope $\alpha$ is not particularly limited but is preferably 2.00 mm/(s·kPa) or less, more preferably 1.95 mm/(s·kPa) or less, and even more preferably 1.90 mm/(s·kPa) or less.

Note that the wall sliding velocity $V_s$ (mm/s) and slope $\alpha$ (mm/(s·kPa)) can be measured by the method described in the Examples section to be described below.

The melt flow rate of the resin composition for cleaning of the present embodiment is preferably 0.5 g/10 min or more, more preferably 100 g/10 min or less, and even more preferably 1 to 80 g/10 min from the viewpoint of the effectiveness of cleaning.

Note that a melt flow rate in this specification refers to a value measured in accordance with ASTM D1238. The measurement conditions were as follows: the measurements were carried out at a temperature of 220 °C under a load of 10 kgf when the thermoplastic resin (A) was an amorphous resin or a crystalline resin with a melting point of 220 °C or lower (e.g., AS resin). If the melting point of the thermoplastic resin (A) exceeds 220 °C, the measurement was performed under the standard measurement conditions for that resin. For example, polyamide 66 has a melting point of about 265 °C and the measurement is carried out at a temperature of 275 °C and under a load of 5 kgf, while PET has a melting point of about 255 °C and the measurement is carried out at a temperature of 285 °C and under a load of 2.16 kgf.

The heating weight loss rate at 300 °C of the resin composition for cleaning of the present embodiment is preferably 3 mass% or less, more preferably 2.8 mass% or less, and even more preferably 2.5 mass% or less, as measured when the temperature is increased from 30 °C to 400 °C at 10 °C/min using a thermogravimetric analyzer. By keeping the heating weight loss rate within this range, the additives and the like do not decompose even when heated, which is desirable because it ensures sufficient workability. The lower limit of the heating weight loss rate is not particularly limited.

Note that the heating weight loss rate can be measured by the method described in the Examples section to be described below.

The water content of the resin composition for cleaning of the present embodiment as measured by the Karl Fischer method is preferably 5000 ppm or less, more preferably 4,800 ppm or less, and even more preferably 4,500 ppm or less. By keeping the water content in these ranges, spurt from the molding machine can be suppressed during the cleaning process, which is desirable because it sufficiently guarantees workability. The lower limit of the water content is not particularly limited, but is preferably 50 ppm or more, more preferably 80 ppm or more, and even more preferably 100 ppm or more.

Note that the water content can be measured by using the method described in the Examples section to be described below.

(Production method of resin composition for cleaning)

Although the method of producing the resin composition for cleaning of the present embodiment is not particularly limited, the resin composition for cleaning can be produced by, for example, a method in which the above-mentioned components are premixed in a mixer, and then kneaded and extruded in an extruder, followed by palletization, or the like.

(Mold of resin composition for cleaning)

The mold of the resin composition for cleaning of the present embodiment is not particularly limited as long as the effects of the present disclosure are not inhibited, and examples of the mold include cylindrical, spherical, flake-like, and powdery mold, for example.

(Method of cleaning molding machine)

A cleaning method of a molding machine (resin molding processing machine) according to the present embodiment includes using the above-described resin composition for cleaning molding machines.

Further, the cleaning method of a resin molding processing machine according to the present embodiment may include a step of causing the above-described resin composition for cleaning to stay in the resin molding processing machine.

Specific examples of the resin molding processing machine include an injection molding machine and an extrusion molding machine.

The cleaning method of a resin molding processing machine according to the present embodiment can not only promote efficient discharge of a mold-processed material before cleaning but can also be easily replaced with the material to be mold-processed after cleaning. In addition, the cleaning method causes the resin composition for cleaning to remain filled in the resin molding processing machine in cases where the resin molding processing machine is suspended after cleaning. This is advantageous in that, even if the mold-processed material before the cleaning remains in the resin molding processing machine due to insufficient cleaning, thermal degradation of the remaining material is prevented.

If a purging compound having a weak cleaning power is used, the material that has been mold-processed before cleaning would remain in a resin molding processing machine and would be mixed into a material to be mold-processed after cleaning as a foreign matter. In addition, there tends to be a problem in that any remaining material to be molded after the molding processing machine is suspended degrades, and the degraded material is mixed after the molding processing machine is started again. Therefore, to avoid this problem, methods to enhance the cleaning power of the cleaning agent often involve incorporating inorganic fillers or inorganic foaming agents into the thermoplastic resin that serves as the base material. However, such cleaning components have low replaceability with the material to be mold-processed after cleaning. As a result, when used for cleaning inside the resin molding processing machine, it takes a long time to replace it with a material to be subsequently molded, leading to significant loss of the material to be moled and a tendency for production efficiency to decrease.

EXAMPLES

Hereinafter, the present disclosure will be described in more detail with reference to Examples and Comparative Examples. The present disclosure is not limited to the following examples unless the gist thereof is exceeded.

Measurement methods and evaluation methods for resin composition for cleaning in Examples and Comparative Examples are as follows.

<Measurements of solubility parameters δ>

Based on the structural formulas of the thermoplastic resin (A), the synthetic wax (B), and the polyolefin-based resin (C), the respective solubility parameters $\delta_{(A)}$, $\delta_{(B)}$, and $\delta_{(C)}$ (values calculated at 25 °C) were obtained from the following equations using Fedors' estimation method.

Fedors' formula: solubility parameter $\delta$ [(cal/cm$^3$)$^{1/2}$] = $(E_v/v)^{1/2}$ = $\Sigma\Delta e_i/\Sigma\Delta v_i)^{1/2}$,

$E_v$: the evaporation energy [cal/mol],
v: the molar volume [cm$^3$/mol],
$\delta e_i$: the evaporation energy of the atom or atomic group of each component [cal/mol], and
$\delta v_i$: the molar volume of each atom or atomic group of each component [cm$^3$/mol].

Note that the structural formulas of the thermoplastic resin (A) and the synthetic wax (B) were determined using conventional structural analysis techniques such as IR, NMR, and mass spectra.

[Evaluation criteria for absolute value of difference between solubility parameters $\delta_{(A)}$ and $\delta_{(B)}$]

A: The absolute value of the difference between $\delta_{(A)}$ and $\delta_{(B)}$ was 2.4 (cal/cm$^3$)$^{1/2}$ or more, indicating that the cleaning characteristic was particularly good
B: The absolute value of the difference between $\delta_{(A)}$ and $\delta_{(B)}$ was 2.2 (cal/cm$^3$)$^{1/2}$ or more and less than 2.4 (cal/cm$^3$)$^{1/2}$, indicating that cleaning characteristic was better
C: The absolute value of the difference between $\delta_{(A)}$ and $\delta_{(B)}$ was 2.0 (cal/cm$^3$)$^{1/2}$ or more and less than 2.2 (cal/cm$^3$)$^{1/2}$, indicating that cleaning characteristic was good
D: The absolute value of the difference between $\delta_{(A)}$ and $\delta_{(B)}$ was less than 2.0 (cal/cm$^3$)$^{1/2}$, making cleaning difficult

[Evaluation criteria for absolute value of difference between solubility parameters $\delta_{(C)}$ and $\delta_{(B)}$]

A: The absolute value of the difference between $\delta_{(C)}$ and $\delta_{(B)}$ was 0.5 (cal/cm$^3$)$^{1/2}$ or more, indicating that the raw material feedability was particularly good

A': The absolute value of the difference between $\delta_{(C)}$ and $\delta_{(B)}$ was 0.4 $(cal/cm^3)^{1/2}$ or more and less than 0.5 $(cal/cm^3)^{1/2}$, indicating that the raw material feedability was even better

B: The absolute value of the difference between $\delta_{(C)}$ and $\delta_{(B)}$ was 0.3 $(cal/cm^3)^{1/2}$ or more and less than 0.4 $(cal/cm^3)^{1/2}$, indicating the raw material feedability was better

C: The absolute value of the difference between $\delta_{(C)}$ and $\delta_{(B)}$ was less than 0.3 $(cal/cm^3)^{1/2}$, indicating that the raw material feedability was good

<Measurement of glass transition temperature>

Measurements were carried out in accordance with ASTM D-3418 using a thermal analyzer (Diamond DSC manufactured by Perkin Elmer) and calculations were conducted using the midpoint method. In cases where multiple glass transition temperatures were present as in cases of copolymers, the transition temperature with the largest baseline shift was used as the glass transition temperature.

<Measurement of melting point>

Measurements were carried out in accordance with JIS K-7210 using a thermal analyzer (Diamond DSC manufactured by Perkin Elmer) and the melting points were calculated. The melting point was measured and evaluated by raising the temperature from 0 °C to 300 °C at a rate of 10 °C/min and lowering it from 300 °C to 0 °C at a rate of 10 °C/min to cancel the thermal history of the resin, and then raising it again from 0 °C to 300 °C at a rate of 10 °C/min.

<Measurement of slope $\alpha$ of wall sliding velocity $V_s$ and true shear stress $\tau_{correct}$

The true shear stress $\tau_{correct}$ was obtained by the Bagley correction using a twin capillary rheometer (RH10 manufactured by Malvern) at a temperature of 220 °C using three different combinations of a long die (capillary die) and a short die (orifice die) as described in (i) to (iii) below. Note that the Rabinowitsch correction was not used.
Combination of orifice die and piston extrusion speed conditions.

(i) Long die (L/d = 20, diameter: 0.5 mm, and inflow angle: 90 °), and short die (L/d = 0.5, diameter: 0.5 mm, and inflow angle: 90 °)
The piston speeds (mm/min) were 0.05, 0.1, 0.2, 0.3, 0.5, 1, 2, 3, 5, 7.5, 10, 15, 20, and 30
(ii) Long die (L/d = 16, diameter: 1 mm, and inflow angle: 90 °), and short die (L/d = 0.25, diameter: 1 mm, and inflow angle: 90 °)
The piston speeds (mm/min) were 0.5, 1, 2, 3, 5, 7.5, 10, 15, 20, 30, 50, 75, and 100
(iii) Long die (L/d = 16, diameter: 2 mm, and inflow angle: 90 °), and short die (L/d = 0.125, diameter: 2 mm, and inflow angle: 90 °)
The piston speeds (mm/min) were 1, 3, 5, 7.5, 10, 15, 20, 30, 50, 75, 100, 150, and 300

The following formula (1) was used to calculate the inflow pressure loss $P_0$, and the obtained inflow pressure loss $P_0$ and formula (2) were used to obtain the compensated true shear stress $\tau_{correct}$.

$$P_0 = (P_s \cdot L_L - P_L \cdot L_S)/(L_L - L_S) \qquad \ldots \text{Formula (1)}$$

$$\tau_{correct}\ [kPa] = (P_L - P_0)d/4L_L \qquad \ldots \text{Formula (2)}$$

(where $P_0$ is the inflow pressure loss of the short die, or the pressure when L/D=0 obtained by extrapolation from the value of $P_L - P_s$ (pressure at the point where the line connecting the calculated pressure value $P_L$ of the long die and the measured pressure value $P_s$ of the short die and extended to the point of zero length intersects the pressure on the Y axis), $P_s$ is the pressure loss occurring on the short die side, $P_L$ is the pressure loss occurring on the long die side, $L_S$ is the length of the short die (mm), $L_L$ is the length of the long die (mm), d is the diameter of capillary of the die (mm))
The sliding velocity $V_s$ was analyzed using the formula (3) based on the Moony method, assuming y = ax + b. At least three levels of the shear stress $\tau_{correct}$ were analyzed. Here, a scatter plot graph was drawn using Excel developed by Microsoft Corporation with 1/R on the X-axis and $\gamma_a$ on the Y-axis, and the slope obtained from the linear approximation multiplied by 1/4 was determined as $V_s$ and the intercept was determined as $\gamma_T$.

$$\gamma_a = \gamma_T + 4V_s/R \qquad\qquad \ldots \text{Formula (3)}$$

(where $\gamma_a$ is the apparent shear rate (1/s), $\gamma_T$ is the true shear rate (1/s), $V_s$ is the sliding velocity (mm/s), and R is the radius of the die (mm))

Furthermore, a scatter plot graph of the corrected true shear stress $\tau_{correct}$ on the x-axis and the wall sliding velocity $V_s$ on the y-axis was drawn using Excel developed by Microsoft Corporation, and the slope $\alpha$ (mm/(s·kPa)) of the line obtained from the linear approximation was calculated. At least three levels of the shear stress $\tau_{correct}$ were analyzed and the R-squared value of the approximate curve was 0.8 or more.

[Evaluation criteria of slope $\alpha$]

A: The slope $\alpha$ was 0.16 mm/(s·kPa) or more, indicating that the sliding velocity effect was exhibited, and the cleaning characteristic was particularly good
B: The slope $\alpha$ was 0.13 mm/(s·kPa) or more and less than 0.16 mm/(s·kPa), indicating that the sliding velocity effect was exhibited, and the cleaning characteristic was better
C: The slope $\alpha$ was 0.10 mm/(s·kPa) or more and less than 0.13 mm/(s·kPa), indicating that the sliding velocity effect was exhibited, and the cleaning characteristic was good
D: The slope $\alpha$ was less than 0.10 mm/(s·kPa), indicating that the sliding velocity effect was not sufficient and cleaning was difficult

<Measurement of heating weight loss rate>

The weight loss rate (mass %) at 300 °C was measured by using a thermogravimetric and differential thermal simultaneous analyzer (TGA-DTA2000SR manufactured by Bruker). The temperature was raised from 30 °C to 400 °C at a temperature increase rate of 10 °C/min under the air.

[Evaluation criteria for heating weight loss]

A: The heating weight loss rate was 3 mass% or less, no fume was emitted from the molding processing machine during the cleaning process, and the workability was good
D: The heating weight loss rate was more than 3 mass%, fume was emitted from the molding processing machine during the cleaning process, and the workability was poor

<Measurement of water content>

The water content (ppm) was obtained in accordance with JIS K7251-B method (moisture vaporization method) by using a Karl Fischer moisture titrator (MKC-510N manufactured by Kyoto Electronics Manufacturing Co., Ltd.). Measurements were carried out under conditions of a vaporization temperature of 185 °C, a duration of 20 minutes using nitrogen gas as the carrier gas (200 mL/min ± 10 mL/min) and the number of measurements was two, and the average of water content (ppm) was determined.

[Evaluation criteria of water content]

A: The water content was 5000 ppm or less, no spouting from the molding machine during the cleaning process, and the workability was good
D: The water content was higher than 5000 ppm, there was a risk of spurt from the molding machine during the cleaning process, and the workability was poor

<Qualitative quantitative analyses of thermoplastic resin (A), synthetic wax (B), and polyolefin-based resin (C)>

Qualitative quantitative analyses (qualitative analyses of resin species and molecular weight and quantitative analysis of component content ratio) of the thermoplastic resin (A), the synthetic wax (B), and the polyolefin-based resin (C) contained in the resin composition were performed. The solvent fractionation, FT-IR, high temperature GPC-IR, thermal gradient interaction chromatography (hereinafter referred to as TGIC), crystallization elution fractionation (hereinafter referred to as CEF), and cross fractionation chromatography (hereinafter referred to as CFC) were performed in combination.

When the thermoplastic resin (A) was a styrene-acrylonitrile copolymer, qualitative quantitative analyses were performed by solvent fractionation according to the following flow scheme. (1) The sample was fractionated into acetone-insoluble and soluble fractions using acetone. (2) The acetone-insoluble fraction was further fractionated into chloroform-insoluble and soluble fractions using chloroform. The resin composition, acetone-soluble fraction, acetone-insoluble fraction, chloroform-soluble fraction, and chloroform-insoluble fraction were measured using FT/IR-4100 (manufactured by JASCO Corporation) with FT-IR/transmission method/resolution of 4 cm$^{-1}$/accumulation count of 16 to perform qualitative analysis on a pressed film. The press films were made at a heat press temperature of 180 °C for a press time of 180 seconds, or at a press temperature and press time with which the above resin composition and soluble- and insoluble-fractions melted.

Qualitative quantitative analyses of the synthetic wax (B) and the polyolefin-based resin (C) were performed using the above-described chloroform-insoluble and/or acetone-insoluble fractions in the following procedure.

(3)-1: In cases where the synthetic wax (B) and the polyolefin-based resin (C) were the same type of resin, a GPC-IR gel permeation chromatograph (manufactured by Polymer Char) equipped with a built-in IR6 MCT infrared detector (manufactured by Polymer Char) was used as the GPC-IR. The mobile solvent was o-dichlorobenzene ODCB (to which BHT was added as an antioxidant), and the columns used were two TSKgel GMH6-HT and two TSKgel GMH6-HTL (manufactured by Tosoh Corporation, length: 7.5, I.D. $\times$ 30 cm) at a column temperature of 140 °C. The detection wavelengths used were as follows: 3.42 $\mu$m for methylene sensor $CH_2$ (2920 cm$^{-1}$), 3.38 $\mu$m for methyl sensor $CH_3$ (2960 cm$^{-1}$), and 5.75 $\mu$m for carbonyl sensor C=O (1740 cm$^{-1}$). The sample concentration was 8 mg/8 mL, the dissolution conditions were 150 °C for 60 min under an $N_2$ atmosphere, and a 10-$\mu$m in-line filter was used for filtration of samples. The injection volume was set to 0.4 mL, and column calibration was performed using monodisperse polystyrene (TSKgel standard polystyrene manufactured by Tosoh Corporation). The molecular weight was calculated using the standard calibration method (polystyrene equivalent). However, the high-temperature GPC method is a relative method based on a calibration curve and does not take the decrease in molecular weight due to the degradation of the standard substances into consideration. If the measured molecular weight fell outside the calibration curve range of the monodisperse polystyrene standards (molecular weight range from 5.9 million to 20.6 million), the molecular weight was calculated by extrapolating the calibration curve. Quantitative analysis was performed using the obtained differential molecular weight distribution curve (Derivative) and the integral intensity percentage (Cumulative). If the peaks of the synthetic wax (B) and the polyolefin-based resin (C) overlapped, quantitative analysis was performed by calculating the position corresponding to the valley of the differential molecular weight distribution curve peaks, or, if no valley was observed, quantitative analysis was performed by vertical separation at the point where the slope varied to become nearly flat. The content ratios of the components to the resin composition were determined from the content ratios of the components calculated from the above solvent fractionation, FT-IR, and GPC-IR.

(3)-2: In cases where the synthetic wax (B) and the polyolefin-based resin (C) were different types of resin, a high-throughput composition distribution analyzer (manufactured by Polymer Char) equipped with an IR5 MCT infrared detector (manufactured by Polymer Char) was used as the TGIC. The mobile solvent was o-dichlorobenzene ODCB (to which BHT was added as an antioxidant), and the column used was a porous graphite carbon column Hypercarb supporting high-temperatures (manufactured by Thermo Scientific, inner diameter: 4.6 mm, length: 100 mm, particle size; 5 $\mu$m). The detection wavelengths used were as follows: 3.42 $\mu$m for methylene sensor $CH_2$ (2920 cm$^{-1}$) and 3.38 $\mu$m for methyl sensor $CH_3$ (2960 cm$^{-1}$). The sample concentration was 8 mg/8 mL, the dissolution conditions were 150 °C for 60 min under an $N_2$ atmosphere, and a 10-$\mu$m in-line filter was used for filtration of samples. The injection volume was set to 0.2 mL. The temperature decrease conditions were from 140 °C to -20 °C at 2 °C/min, with a flow rate of 0.0 mL/min. The temperature increase conditions were from -20 °C to 165 °C at 2 °C/min, with a flow rate of 0.5 mL/min. The content ratios of the components to the resin composition were determined from the content ratios of the components calculated from the above solvent fractionation, FT-IR, and TGIC.

<Measurement of raw material feedability>

Black-colored PPE resin molding material was fed into an injection molding machine with the cylinder and nozzle temperatures raised to 280 °C. One kilogram of the resin composition for cleaning molding machines listed in Tables 1 to 2 was fed into the injection molding machine, and a metered purging operation (metered injection operation) was performed under the conditions of a metering stroke of 50 mm and a back pressure of 2 MPa. The average time required for one shot of metering and the number of shots until cleaning was completed were measured. The results are summarized in Tables 1 to 2. The shorter the metering time, the more stable the raw material feedability was, and the evaluation was conducted based on the following evaluation criteria.

[Evaluation criteria for raw material feedability]

A: The time required for metering one shot was 10 seconds or shorter, indicating that the raw material feedability was particularly good
B: The time required for metering one shot was longer than 10 seconds and 20 seconds or shorter, indicating that the raw material feedability was better
C: The time required for metering one shot was longer than 20 seconds and 30 seconds or shorter, indicating that the raw material feedability was good
D: The time required for metering one shot was longer than 30 seconds, resulting in poor metering and difficulty in cleaning.

[Evaluation criteria for metered purge suitability]

A: The time required to complete cleaning (the product of the average time required per shot and the total number of shots) was shorter than 150 seconds, and the metered purge suitability is particularly good
B: The time required to complete cleaning (the product of the average time required per shot and the total number of shots) was shorter than 200 seconds, and the metered purge suitability is better
C: The time required to complete cleaning (the product of the average time required per shot and the total number of shots) was shorter than 250 seconds, and the metered purge suitability is better
D: The time required to complete cleaning (the product of the average time required for one shot and the total number of shots) was 250 seconds or longer, resulting in poor metered purging suitability and making cleaning difficult.

<Evaluation of cleaning power and evaluation of replaceability>

One kilogram of black-colored ABS resin molding material was fed into an injection molding machine with the cylinder and nozzle temperatures raised to 220 °C. After filling, the material was discharged by injection operation to empty the molding machine. Next, 1 kg of each resin composition for cleaning molding machines listed in Tables 1 to 2 was fed into the injection molding machine, and a cleaning injection operation was performed. The amount of purge waste of the resin composition for cleaning molding machines required to eliminate the influence of the black-colored ABS product (mass required for cleaning in Tables 1 to 2) was measured. Finally, to replace the resin composition for cleaning molding machines, 2 kg of GPPS transparent molding material was fed into the injection molding machine, and an injection operation (replacement injection operation) was performed. The amount of purge waste of the GPPS transparent molding material used until it was confirmed that there were no influences of residues (such as foreign substances or coloration that would impair transparency) was measured (mass required for replacement in Tables 1 to 2). The results are summarized in Tables 1 to 2.
The less purge waste of the resin composition for cleaning molding machines from the black-colored ABS product, the better the cleaning power. The evaluation was made based on the following evaluation criteria.

[Evaluation criteria for cleaning power]

A: The amount of the purge waste was 0.3 kg or less, indicating that the cleaning characteristic was particularly good
B: The amount of the purge waste was more than 0.3 kg and 0.4 kg or less, indicating that the cleaning characteristic was better
C: The amount of the purge waste was more than 0.4 kg and 0.5 kg or less, indicating that the cleaning characteristic was good
D: The amount of the purge waste was more than 0.5 kg, indicating that cleaning was difficult

Additionally, the less purge waste of the GPPS transparent molding material from the resin composition for cleaning molding machines, the better the replaceability. The evaluation was made based on the following evaluation criteria.

[Evaluation criteria for replaceability]

A: The amount of the purge waste was 1.0 kg or less, indicating that the replaceability was particularly good
B: The amount of the purge waste was more than 1.0 kg and 1.5 kg or less, indicating that the replaceability was better
D: The amount of the purge waste was more than 3.0 kg, indicating that replacement from the resin composition for cleaning was difficult

When the melting point of the thermoplastic resin (A) is 200 °C or higher, or when the glass transition temperature is 130 °C or higher, 1 kg of black-colored PPS raw material was charged into an injection molding machine heated to a cylinder and nozzle temperature of 330 °C for the evaluation of cleaning. Next, 1 kg of the resin composition for cleaning molding machines listed in Tables 1 to 2 was fed into the injection molding machine, and injection operation (cleaning injection operation) was performed. The amount of purge waste of the resin composition for cleaning molding machines required to eliminate the influence of the PPS black-colored product disappeared (mass required for cleaning in Tables 1 to 2) was measured. Finally, to replace the resin composition for cleaning molding machines, 2 kg of PC transparent molding material was fed into the injection molding machine, and an injection operation (replacement injection operation) was performed. The amount of purge waste of the PC transparent molding material used until it was confirmed that there were no influences of residues (such as foreign substances or discoloration that would impair transparency) was measured (mass required for replacement in Tables 1 to 2). The results are summarized in Tables 1 to 2.
The less purge waste of the resin composition for cleaning molding machines from the black-colored PPS product, the better the cleaning power. The evaluation was made based on the following evaluation criteria.

[Evaluation criteria for cleaning power]

A: The amount of the purge waste was 0.5 kg or less, indicating that the cleaning characteristic was particularly good
B: The amount of the purge waste was more than 0.5 kg and 0.6 kg or less, indicating that the cleaning characteristic was better
C: The amount of the purge waste was more than 0.6 kg and 0.7 kg or less, indicating that the cleaning characteristic was good
D: The amount of the purge waste was more than 0.7 kg, indicating that cleaning was difficult

Additionally, the less purge waste of the PC transparent molding material from the resin composition for cleaning molding machines, the better the replaceability. The evaluation was made based on the following evaluation criteria.

[Evaluation criteria for replaceability]

A: The amount of the purge waste was 1.5 kg or less, indicating that the replaceability was particularly good
B: The amount of the purge waste was more than 1.5 kg and 2.0 kg or less, indicating that the replaceability was better
D: The amount of the purge waste was more than 2.0 kg, indicating that cleaning from the resin composition for cleaning was difficult.

The raw materials used in Examples and Comparative Examples are as follows.

[Thermoplastic resin (A)]

AS1: Styrene-acrylonitrile-based resin (Stylac manufactured by Asahi Kasei Corporation, weight average molecular weight: 130,000, MFR = 13 g/10 min; 220 °C, 10 kgf)
AS2: Styrene-acrylonitrile-based resin (LURAN manufactured by INEOS, weight average molecular weight: 180,000, MFR = 12 g/10 min; 220 °C, 10 kgf)
PA: Nylon 66 resin (Leona manufactured by Asahi Kasei Corporation, MFR = 7 g/10 min; 275 °C, 5 kgf)
PC: Polycarbonate-based resin (WONDERLITE manufactured by Chimei Corporation, Taiwan, 10 g/10 min; 220 °C, 10 kgf)

PET: Polyester-based resin (LEMAPET manufactured by Mitsubishi Engineering-Plastics Corporation, 30 g/10 min; 285 °C, 2.16 kgf)

HD: High-density polyethylene resin (SUNTEC manufactured by Asahi Kasei Corporation, 4 g/10 min; 220 °C, 10 kgf)

PP: Polypropylene-based resin (Homo PP manufactured by SunAllomer Ltd., 6 g/10 min; 220 °C, 10 kgf)

PS: Polystyrene resin (GPPS manufactured by PS Japan Corporation, 16 g/10 min; 220 °C, 10 kgf)

EEA: Ethylene ethyl acrylate resin (ELVALOY AC manufactured by Mitsui DuPont Polychemical, 20 g/10 min; 220 °C, 10 kgf)

EMMA: Ethylene methyl methacrylate resin (Acryft 1 manufactured by Mitsui DuPont Polychemical, 18 g/10 min; 220 °C, 10 kgf)

Acid-modified polyethylene (NUCREL manufactured by Mitsui DuPont Polychemical, 14 g/10 min; 220 °C, 10 kgf)

Acid-modified polypropylene (Modic manufactured by Mitsubishi Chemical Corporation, 16 g/10 min; 220 °C, 10 kgf)

[Synthetic wax (B)]

PP wax: Homopolymer polypropylene wax (weight average molecular weight: 40000, melting point: 145 °C)

PE wax 1: Homopolymer polyethylene wax (weight average molecular weight: 13,000, melting point: 127 °C)

PE wax 2: Homopolymer polyethylene wax (weight average molecular weight: 4,300, melting point: 122 °C)

PE wax 3: Homopolymer polyethylene wax (weight average molecular weight: 1,100, melting point: 116 °C)

MAH-PE wax: Maleic anhydride-modified PE wax (Hi-Wax manufactured by Mitsui Chemicals Inc., weight average molecular weight: 24,000, melting point: 142 °C)

MAH-PP wax: Maleic anhydride-modified PP wax (UMEX manufactured by Sanyo Chemical Industries, Ltd., weight average molecular weight: 30000, melting point: 135 °C)

The weight average molecular weights of the above-listed synthetic waxes (B) were measured by an ultra-high temperature GPC (manufactured by Senshu Scientific Co., Ltd.) using 1-chloronaphthalene as the eluent and polystyrene as the standard material at a column temperature of 210 °C. A differential refractive index (RI) detector was used as the detector.

[Polyolefin-based resin (C)]

PE1: Ultra-high molecular weight polyethylene resin (SUNFINE UH950 manufactured by Asahi Kasei Corporation), glass transition temperature: -120 °C

PE2: Low-density polyethylene resin (SUNTEC M2102 manufactured by Asahi Kasei Corporation), glass transition temperature: -120 °C

PE3: High-density polyethylene resin (SUNTEC B770 manufactured by Asahi Kasei Corporation), glass transition temperature: -119 °C

PP1: Polypropylene-based resin (PB170A manufactured by SunAllomer Ltd.), glass transition temperature: 0 °C

PP2: Polypropylene-based resin (PL500A manufactured by SunAllomer Ltd.), glass transition temperature: 2 °C

ABS: Acrylonitrile-butadiene-styrene copolymerization resin (TOYOLAC manufactured by Toray Industries, Inc.), glass transition temperature: 104 °C

[Inorganic filler]

Glass fiber (chopped strand manufactured by Nippon Electric Glass Co., Ltd.)

Wollastonite (NYGLOS manufactured by NYCO Minerals Inc.)

Talc (MICRO ACE manufactured by Nippon Talc Co., Ltd.)

[Other additives]

PEO: Polyethylene oxide (Alkox manufactured by Meisei Chemical Works, Ltd.)

Liquid paraffin (MORESCO WHITE manufactured by MORESCO)
Nonionic surfactants: Polyoxyethylene and diisodecyl adipate
Anionic surfactant: Sodium dodecyl benzene sulfonate
Zinc stearate
EBS: Ethylene bisstearate amide

[Example 1]

The ingredients listed in Table 1 were mixed, melt-kneaded using an extruder. Thereafter, the melt-kneaded mixture was extruded into strands, which were in water and cut with a strand cutter to obtain a pelletized resin composition for cleaning molding machines. The kneading conditions were as follows: the cylinder temperature was 270 °C and the extrusion rate as 200 kg/hour.
Evaluation results of the obtained resin composition for cleaning molding machines are summarized in Table 1.

[Examples 2 to 28]

Pelletized resin compositions for cleaning molding machines were obtained in the same manner as in Example 1 except that the compositions were changed as summarized in Table 1.
Evaluation results of the obtained resin compositions for cleaning molding machines are summarized in Table 1.

[Examples 29 to 31]

In cases of the thermoplastic resins (A) with a melting point of 200 °C or higher or a glass transition temperature of 130 °C or higher, the kneading conditions were changed as follows: the cylinder temperature was changed to 330 °C and the extrusion rate was changed to 200 kg/hour. Evaluation results of the obtained resin compositions for cleaning molding machines are summarized in Table 1.

[Comparative Examples 1 to 21]

Pelletized resin compositions for cleaning molding machines were obtained in the same manner as in Example 1 except that the compositions were changed as summarized in Table 2.
Evaluation results of the obtained resin compositions for cleaning molding machines are summarized in Table 2.

[Table 1]

EP 4 574 382 A1

| Table 1 | | | δ | Content | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 | Example 18 | Example 19 | Example 20 | Example 21 | Example 22 | Example 23 | Example 24 | Example 25 | Example 26 | Example 27 | Example 28 | Example 29 | Example 30 | Example 31 |
|---|---|---|---|---|---|---|---|---|---|---|---|---|---|---|---|---|---|---|---|---|---|---|---|---|---|---|---|---|---|---|---|---|---|---|---|
| Composition | Thermoplastic resin (A) | ASI | 10.6 | mass% | 98.9 | 98.7 | 98.0 | 96.8 | 96.7 | 96.6 | 96.0 | 92.0 | 90.0 | 88.0 | 94.0 | 89.0 | 84.0 | 95.0 | 96.0 | 96.0 | 96.0 | 96.0 | 96.0 | 96.0 | 96.0 | 96.0 | 96.0 | 96.0 | 48.0 | 44.0 | 44.0 | 42.0 | | | |
| | | PA | 12.4 | mass% | | | | | | | | | | | | | | | | | | | | | | | | | | | | | 96 | | |
| | | PC | 10.6 | mass% | | | | | | | | | | | | | | | | | | | | | | | | | | | | | | 96 | |
| | | PET | 11.4 | mass% | | | | | | | | | | | | | | | | | | | | | | | | | | | | | | | 96 |
| | Synthetic wax (B) | PP wax | 8.0 | mass% | 0.1 | 0.3 | 1 | 3 | 3 | 3 | 3 | 3 | 3 | 3 | 5 | 10 | 15 | 3 | 3 | 3 | 3 | 3 | | | | | | | 3 | 4 | 3 | 3 | 3 | 3 | 3 |
| | | PE wax1 | 8.6 | mass% | | | | | | | | | | | | | | | | | | | 3 | 3 | 3 | 3 | | | | | | | | | |
| | | PE wax2 | 8.6 | mass% | | | | | | | | | | | | | | | | | | | | | | | 3 | | | | | | | | |
| | | PE wax3 | 8.6 | mass% | | | | | | | | | | | | | | | | | | | | | | | | 3 | | | | | | | |
| | Polyolefin resin (C) | PP1 | 8.0 | mass% | | | | | | | | | | | | | | | | | | | | | | | | 1 | | | | | | | |
| | | PP2 | 8.0 | mass% | | | | | | | | | | | | | | | | | | | | | | | 1 | | | | | | | | |
| | | PE1 | 8.6 | mass% | 1 | 1 | 1 | 0.2 | 0.3 | 0.4 | 1 | 5 | 7 | 9 | 1 | 1 | 1 | 1 | 1 | 1 | | 1 | | 1 | | | | | 1 | 2 | 5 | 7 | 1 | 1 | 1 |
| | | PE2 | 8.6 | mass% | | | | | | | | | | | | | | | | | | | 1 | | | 1 | | | | | | | | | |
| | | PE3 | 8.6 | mass% | | | | | | | | | | | | | | | | | 1 | | | | 1 | | | | | | | | | | |
| | Inorganic filler | Glass fiber | - | mass% | | | | | | | | | | | | | | | | | | | | | | | | | 48 | 48 | | | | | |
| | | Wollastonite | - | mass% | | | | | | | | | | | | | | | | | | | | | | | | | | | 48 | 48 | | | |
| Physical properties | MFR | | | g/10min | 15.0 | 16.3 | 18.9 | 25.9 | 25.8 | 25.6 | 25.6 | 23.5 | 22.1 | 20.6 | 33.1 | 64.2 | 80.5 | 25.0 | 26.1 | 25.8 | 25.6 | 25.9 | 25.4 | 28.9 | 29.2 | 28.3 | 27.3 | 26.8 | 4.6 | 6.8 | 30.9 | 28.3 | 14.8 | 14.6 | 45.1 |
| | Absolute difference between δ(A) and δ(B) | | | (cal/cm³)^{1/2} | 2.6 | 2.6 | 2.6 | 2.6 | 2.6 | 2.6 | 2.6 | 2.6 | 2.6 | 2.6 | 2.6 | 2.6 | 2.6 | 2.6 | 2.6 | 2.6 | 2.6 | 2.6 | 2.0 | 2.0 | 2.0 | 2.0 | 2.0 | 2.0 | 2.6 | 2.6 | 2.6 | 2.6 | 4.4 | 2.6 | 2.8 |
| | | | | Evaluation | A | A | A | A | A | A | A | A | A | A | A | A | A | A | A | A | A | A | C | C | C | C | C | C | A | A | A | A | A | A | A |
| | Absolute difference between δ(B) and δ(C) | | | (cal/cm³)^{1/2} | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.0 | 0.0 | 0.0 | 0.0 | 0.6 | 0.6 | 0.6 | 0.6 | 0.6 | 0.6 | 0.6 | 0.6 | 0.6 |
| | | | | Evaluation | A | A | A | A | A | A | A | A | A | A | A | A | A | A | A | A | A | A | C | C | C | C | A | A | A | A | A | A | A | A | A |
| | Slope α | | | mm/s·kPa | 0.04 | 0.10 | 0.12 | 0.16 | 0.16 | 0.17 | 0.16 | 0.16 | 0.15 | 0.15 | 0.20 | 0.25 | 0.32 | 0.16 | 0.16 | 0.16 | 0.17 | 0.15 | 0.13 | 0.13 | 0.14 | 0.13 | 0.13 | 0.13 | 0.60 | 0.85 | 0.50 | 0.40 | 0.3 | 0.22 | 0.28 |
| | | | | Evaluation | D | C | C | A | A | A | A | A | A | B | B | A | A | B | B | B | A | B | B | B | B | B | B | B | A | A | A | A | A | A | A |
| | Raw material feedability | Average measure. time | | | 7 | 8 | 9 | 11 | 9 | 8 | 8 | 7 | 7 | 7 | 10 | 20 | 24 | 7 | 10 | 11 | 14 | 15 | 8 | 12 | 13 | 16 | 15 | 15 | 12 | 13 | 6 | 6 | 14 | 12 | 15 |
| | | Evaluation | | | A | A | A | B | A | A | A | A | A | A | B | C | C | A | B | B | B | B | A | B | B | B | B | B | B | B | A | A | B | B | B |
| | Metered purging suitability | Number of shots required to complete cleaning | | | 15 | 16 | 17 | 19 | 19 | 18 | 17 | 15 | 14 | 13 | 16 | 10 | 10 | 17 | 17 | 17 | 17 | 16 | 17 | 17 | 17 | 15 | 16 | 16 | 5 | 6 | 10 | 9 | 9 | 8 | 10 |
| | | Total time required until completion of cleaning | | | 105 | 128 | 153 | 209 | 171 | 144 | 136 | 105 | 98 | 91 | 160 | 200 | 240 | 119 | 170 | 187 | 238 | 240 | 136 | 204 | 221 | 240 | 240 | 240 | 60 | 78 | 60 | 54 | 126 | 96 | 150 |
| | | Evaluation | | | A | A | B | C | B | A | A | A | A | A | B | C | C | A | B | B | C | C | A | C | C | C | C | C | A | A | A | A | A | A | B |
| | Heating weight loss rate | | | mass% | 0.13 | 0.14 | 0.14 | 0.14 | 0.15 | 0.15 | 0.14 | 0.14 | 0.14 | 0.15 | 0.15 | 0.15 | 0.15 | 0.14 | 0.14 | 0.15 | 0.15 | 0.15 | 0.14 | 0.15 | 0.14 | 0.15 | 0.16 | 0.15 | 0.16 | 0.17 | 0.17 | 0.17 | 0.13 | 0.14 | 0.14 |
| | | | | Evaluation | A | A | A | A | A | A | A | A | A | A | A | A | A | A | A | A | A | A | A | A | A | A | A | A | A | A | A | A | A | A | A |
| | Water content | | | ppm | 4500 | 4400 | 4400 | 4400 | 4500 | 4400 | 4300 | 4300 | 4300 | 4200 | 4300 | 4300 | 4200 | 4400 | 4600 | 4500 | 4500 | 4700 | 4500 | 4400 | 4400 | 4500 | 4400 | 4400 | 3600 | 3400 | 3400 | 3300 | 4900 | 4700 | 4900 |
| | | | | Evaluation | A | A | A | A | A | A | A | A | A | A | A | A | A | A | A | A | A | A | A | A | A | A | A | A | A | A | A | A | A | A | A |
| | Cleaning power (mass for cleaning) | | | Kg | 0.49 | 0.45 | 0.38 | 0.30 | 0.29 | 0.29 | 0.29 | 0.30 | 0.31 | 0.33 | 0.30 | 0.33 | 0.34 | 0.30 | 0.29 | 0.30 | 0.31 | 0.32 | 0.34 | 0.34 | 0.35 | 0.33 | 0.34 | 0.36 | 0.23 | 0.23 | 0.28 | 0.28 | 0.45 | 0.39 | 0.48 |
| | | | | Evaluation | C | C | B | A | A | A | A | A | B | B | A | B | B | A | A | A | B | B | B | B | B | B | B | B | A | A | A | A | C | A | B |
| | Replaceability (mass required for replacement) | | | Kg | 1.40 | 1.40 | 1.00 | 0.70 | 0.80 | 0.90 | 1.00 | 1.40 | 1.50 | 1.50 | 0.80 | 0.90 | 0.90 | 1.00 | 1.00 | 1.00 | 1.00 | 1.00 | 1.10 | 1.10 | 1.20 | 1.10 | 1.10 | 1.10 | 1.30 | 1.40 | 1.30 | 1.50 | 1.4 | 1.2 | 1.6 |
| | | | | Evaluation | B | B | A | A | A | A | A | B | B | B | A | A | A | A | A | A | A | A | B | B | B | B | B | B | B | B | B | B | B | A | B |
| | Cleaning workability | | | Evaluation | A | A | A | A | A | A | A | A | A | A | A | A | A | A | A | A | A | A | A | A | A | A | A | A | A | A | A | A | A | A | A |

[Table 2]

Table 2

| Composition / Physical properties | | Content | δ | Comp. Ex 1 | Comp. Ex 2 | Comp. Ex 3 | Comp. Ex 4 | Comp. Ex 5 | Comp. Ex 6 | Comp. Ex 7 | Comp. Ex 9 | Comp. Ex 10 | Comp. Ex 11 | Comp. Ex 12 | Comp. Ex 13 | Comp. Ex 14 | Comp. Ex 15 | Comp. Ex 16 | Comp. Ex 17 | Comp. Ex 18 | Comp. Ex 19 | Comp. Ex 20 | Comp. Ex 21 |
|---|---|---|---|---|---|---|---|---|---|---|---|---|---|---|---|---|---|---|---|---|---|---|---|
| **Thermoplastic resin (A)** | AS1 | mass% | 10.6 | 40 | | 84 | 96.9 | 87 | 80 | | | | | | | | | | | | | 100 | 79 |
| | AS2 | mass% | 10.4 | 20 | 43 | | | | | | | | | | | | | | | | | | |
| | PS | mass% | 9.8 | | | | | | | 90 | | | | | | | | | | | | | |
| | Heat-resistant PS | mass% | 11.6 | | | | | | | | | | | | | | | | | | | | |
| | ABS | mass% | 10.3 | 39 | | | | | | | | | | | | | | | | | | | |
| | PA | mass% | 12.4 | | | | | | | | | 55 | | | | | | | | | | | |
| | PET | mass% | 11.4 | | | | | | | | | | 50 | | | | | | | 20 | 20 | | |
| | EEA | mass% | 9.5 | | | | | | | | | | | 65 | | | | | | | | | |
| | EMMA | mass% | 9.9 | | | | | | | | 38 | | | | | | | | | | | | |
| **Synthetic wax (B)** | MAH-PE wax | mass% | 9.1 | | | | | | | | | | | | | 1 | 3 | 3 | 0.05 | | | | |
| | PP wax | mass% | 8.0 | | | | 3 | 3 | | | | | | | | | | | | | | | |
| | PE wax1 | mass% | 8.6 | 0.5 | 2 | 2 | | | | | | | | | | | | | | 57 | 47 | | |
| **Polyolefin resin (C)** | PP1 | mass% | 8.0 | | | | | | | | 10 | | | | 10 | 5 | 10 | 10 | 10 | | | | 21 |
| | PP2 | mass% | 8.0 | | 11 | | 0.1 | 10 | | | 2 | | | | | | | | | | | | |
| | Acid-modified-polypropylene | mass% | 8.3 | | | | | | | | | | | | | | | | | | | | |
| | PE1 | mass% | 8.6 | | | | | | | | | | | | | | | | | | | | |
| | PE2 | mass% | 8.6 | | | | | | | | | | | | | | | | | 20 | 20 | | |
| | PE3 | mass% | 8.6 | | | | | | | | | | | | | | | | | | | | |
| | Acid-modified-polyethylene | mass% | 8.9 | | | | | | | | | | | 30 | 29.9 | 30 | 32 | 32 | 39.9 | | | | |
| | PEO | mass% | 9.4 | | | | | | 20 | | | | | | | | | | | | 10 | | |
| **Additive** | Sodium stearate | mass% | 9.1 | | | | | | | 6 | | | | | | | | | | | | | |
| | Liquid paraffin | mass% | 8.3 | | | | | | | 5 | | | | | | | | | | | | | |
| | Zinc stearate | mass% | 9.1 | | | | | | | | | | | | | | | | | | | | |
| | EBS | mass% | 9.6 | | | | | | | | | | | | | | | | | | | | |
| | Nonionic surfactant | mass% | 8.8 | | | | | | | | | | | | 10 | 10 | 5 | 5 | | | | | |
| | Anionic Surfactant | mass% | 8.8 | | | | | | | | | 5 | 10 | 5 | 0.1 | | | | 0.05 | | | | |
| **Inorganic filler** | Glass fiber | mass% | – | | 44 | | | | | | | | | | | | | | | | | | |
| | Wollastonite | mass% | – | | | 14 | | | | | | | | | | | | | | 3 | 3 | | |
| | Calcium carbonate | mass% | – | | | | | | | | | | | | | | | | | | | | |
| | Talc | mass% | – | | | | | | | | 50 | 40 | 40 | | 50 | 54 | 50 | 50 | 50 | | | | |
| **Physical properties** | MER | g/10min | | 18.1 | 5.1 | 20.5 | 26.0 | 25.2 | 13.1 | 28.1 | 6.3 | 19.8 | 89.9 | 32.4 | 60.2 | 41.3 | 58.3 | 54.7 | 62.1 | 52.1 | 53.9 | 13.1 | 98.8 |
| | Absolute difference between δ(A) and δ(B) | (cal/cm³)^{1/2} | | 1.9 | 1.8 | 1.8 | 2.6 | 2.6 | – | – | – | – | – | – | – | – | – | – | – | – | – | – | 2.0 |
| | | Evaluation | | D | D | D | A | A | – | – | – | – | – | – | – | – | – | – | – | – | – | – | C |
| | Absolute difference between δ(B) and δ(C) | (cal/cm³)^{1/2} | | – | 0.6 | – | 0.6 | 0.6 | – | – | – | – | – | – | 0.6 | 0.6 | 0.6 | 0.6 | 0.6 | – | – | – | – |
| | | Evaluation | | – | A | – | A | A | – | – | – | – | – | – | A | A | A | A | A | – | – | – | – |
| | Slope α | mm/s·kPa | | 0.04 | 0.10 | 0.12 | 0.17 | 0.16 | 0.03 | 0.18 | 0.20 | 0.12 | 0.12 | 0.10 | 0.16 | 0.32 | 0.24 | 0.26 | 0.16 | 0.08 | 0.07 | 0.02 | 0.20 |
| | | Evaluation | | A | A | C | A | A | D | A | A | C | C | C | A | A | A | A | A | D | D | D | A |
| | Raw material feedability | Average measure time | | 31 | 13 | 60 | 43 | 14 | 9 | 35 | 38 | 20 | 15 | 16 | 45 | 51 | 34 | 35 | 34 | 28 | 30 | 7 | 52 |
| | | Evaluation | | D | D | D | A | C | A | A | D | C | D | B | A | A | A | A | A | D | D | D | C |
| | Metered-purging suitability | Number of shots required to complete cleaning | | 23 | 16 | 10 | 20 | 17 | 17 | 10 | 8 | 10 | 15 | 14 | 10 | 9 | 11 | 12 | 13 | 12 | 11 | 15 | 11 |
| | | Total time required until completion of cleaning | | 713 | 208 | 600 | 860 | 238 | 153 | 350 | 304 | 200 | 225 | 224 | 450 | 459 | 374 | 420 | 442 | 336 | 330 | 105 | 572 |
| | | Evaluation | | D | D | D | D | C | B | D | D | C | D | C | A | A | D | D | D | C | D | D | D |
| | Heating weight loss rate | mass% | | 0.14 | 0.13 | 0.12 | 0.14 | 0.14 | 0.13 | 3.2 | 3.8 | 3.1 | 4.0 | 3.9 | 3.5 | 3.8 | 4.2 | 4.1 | 4.0 | 0.15 | 0.16 | 0.14 | 0.16 |
| | | Evaluation | | A | A | A | A | A | A | D | D | D | D | D | A | D | D | D | D | A | A | A | A |
| | Water content | ppm | | 4500 | 4400 | 4200 | 4500 | 4500 | 3700 | 6800 | 4600 | 4500 | 4800 | 4700 | 1200 | 6500 | 5200 | 5300 | 3600 | 3700 | 3800 | 4600 | 4400 |
| | | Evaluation | | A | A | A | A | A | A | D | A | A | D | D | A | D | D | D | D | D | D | A | A |
| | Cleaning power (mass for cleaning) | Kg | | 0.51 | 0.30 | 0.42 | 0.31 | 0.30 | 0.45 | 0.40 | 0.42 | 0.35 | 0.35 | 0.38 | 0.37 | 0.32 | 0.31 | 0.32 | 0.37 | 0.51 | 0.52 | 0.54 | 0.70 |
| | | Evaluation | | D | A | C | B | A | C | B | C | B | B | B | B | B | B | B | B | D | D | D | D |
| | Replaceability (mass required for replacement) | Kg | | 1.10 | 1.70 | 1.50 | 0.70 | 1.80 | 1.60 | 1.70 | 1.40 | 1.50 | 1.40 | 1.60 | 1.40 | 1.30 | 1.20 | 1.30 | 1.30 | 1.30 | 1.40 | 1.50 | 0.80 |
| | | Evaluation | | B | D | B | A | D | D | D | B | D | D | D | B | B | B | D | D | B | B | B | A |
| | Cleaning workability | Evaluation | | A | D | A | A | A | A | D | D | D | D | D | D | B | D | D | D | A | A | A | A |

It can be understood from the above results that the resin compositions for cleaning molding machines obtained in Examples 1 to 31 had good cleaning capability and easy replacement and were excellent in metered purge suitability and workability.

On the other hand, the above results indicated that the resin compositions for cleaning molding machines obtained in Comparative Examples 1 to 21 had insufficient cleaning power and/or replaceability or had poor raw material feedability and/or metered purge suitability and workability.

INDUSTRIAL APPLICABILITY

The resin composition for cleaning molding machines exhibits excellent cleaning performance and replaceability, as well as excellent metered purge suitability and workability, and is useful for cleaning thermoplastic resins, especially as a purging agent composition for injection molding machines and extrusion molding machines.

## Claims

1. A resin composition for cleaning molding machines comprising at least a thermoplastic resin (A), a synthetic wax (B), and a polyolefin-based resin (C), wherein an absolute value of a difference between a solubility parameter $\delta_{(A)}$ of the thermoplastic resin (A) and a solubility parameter $\delta_{(B)}$ of the synthetic wax (B) is 2.0 $(cal/cm^3)^{1/2}$ or more and 7.0 $(cal/cm^3)^{1/2}$ or less, a compounding amount of the polyolefin-based resin (C) is more than 0.1 mass% and less than 10 mass%, and a glass transition temperature of the polyolefin-based resin (C) is higher than -150 °C and lower than 40 °C.

2. The resin composition for cleaning molding machines according to claim 1, wherein the thermoplastic resin (A) is a polycarbonate-based resin.

3. The resin composition for cleaning molding machines according to claim 1 or 2, wherein the synthetic wax (B) is a homopolymer polyethylene wax or a homopolymer polypropylene wax.

4. The resin composition for cleaning molding machines according to claim 1 or 2, wherein a weight average molecular weight of the synthetic wax (B) is 1000 to 50,000.

5. The resin composition for cleaning molding machines according to claim 1 or 2, wherein a content of the synthetic wax (B) is 0.1 to 20 mass%.

6. The resin composition for cleaning molding machines according to claim 1 or 2, wherein a relationship among the solubility parameter $\delta_{(A)}$ of the first thermoplastic resin (A), the solubility parameter $\delta_{(B)}$ of the synthetic wax (B), and a solubility parameter $\delta_{(C)}$ of the second thermoplastic resin (C) is $\delta_{(A)} > \delta_{(C)} \geq \delta_{(B)}$.

7. The resin composition for cleaning molding machines according to claim 1 or 2, wherein an absolute value of a difference between the solubility parameter $\delta_{(A)}$ of the thermoplastic resin (A) and the solubility parameter $\delta_{(C)}$ of the polyolefin-based resin (C) is 2.0 $(cal/cm^3)^{1/2}$ or more and 7.0 $(cal/cm^3)^{1/2}$ or less.

8. The resin composition for cleaning molding machines according to claim 1 or 2, wherein a slope $\alpha$ determined from a linear approximation line in a scatter diagram graph plotting a sliding velocity $V_s$ (mm/s) and a true shear stress $\tau_{correct}$ (kPa) is 0.10 mm/(s·kPa) or more.

9. The resin composition for cleaning molding machines according to claim 1 or 2, wherein a water content measured by the Karl Fischer method is 5000 ppm or less.

10. The resin composition for cleaning molding machines according to claim 1 or 2, wherein a heating weight loss rate at 300 °C is 3 mass% or less.

## INTERNATIONAL SEARCH REPORT

| International application No. |
|---|
| **PCT/JP2023/029645** |

**A. CLASSIFICATION OF SUBJECT MATTER**

*B29C 33/72*(2006.01)i; *B29C 45/17*(2006.01)i; *B29C 48/27*(2019.01)i; *C08L 23/06*(2006.01)i; *C08L 23/12*(2006.01)i; *C08L 91/06*(2006.01)i; *C08L 101/00*(2006.01)i; *C11D 7/22*(2006.01)i
FI: B29C33/72; B29C45/17; B29C48/27; C08L23/06; C08L23/12; C08L91/06; C08L101/00; C11D7/22

According to International Patent Classification (IPC) or to both national classification and IPC

**B. FIELDS SEARCHED**

Minimum documentation searched (classification system followed by classification symbols)

B29C33/72; B29C45/17; B29C48/27; C08L23/06; C08L23/12; C08L91/06; C08L101/00; C11D7/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-218540 A (TOKYO SHOKAI CO., LTD.) 14 December 2017 (2017-12-14)<br>entire text | 1-10 |
| A | JP 2-308838 A (CHISSO CORP.) 21 December 1990 (1990-12-21)<br>entire text | 1-10 |
| A | JP 4-246443 A (CHISSO CORP.) 02 September 1992 (1992-09-02)<br>entire text | 1-10 |
| A | WO 2019/167829 A1 (ASAHI KASEI CORP.) 06 September 2019 (2019-09-06)<br>entire text | 1-10 |
| P, A | JP 2023-31305 A (ASAHI KASEI CORP.) 08 March 2023 (2023-03-08)<br>entire text | 1-10 |

☐ Further documents are listed in the continuation of Box C. ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/029645**

| Patent document cited in search report | | | Publication date (day/month/year) | Patent family member(s) | | | Publication date (day/month/year) |
|---|---|---|---|---|---|---|---|
| JP | 2017-218540 | A | 14 December 2017 | (Family: none) | | | |
| JP | 2-308838 | A | 21 December 1990 | US | 5087653 | A | |
| | | | | entire text | | | |
| | | | | US | 5124383 | A | |
| | | | | EP | 399445 | A1 | |
| | | | | CN | 1047517 | A | |
| | | | | KR | 10-1990-0018354 | A | |
| JP | 4-246443 | A | 02 September 1992 | US | 5238608 | A | |
| | | | | entire text | | | |
| | | | | KR | 10-1992-0014867 | A | |
| WO | 2019/167829 | A1 | 06 September 2019 | CN | 111712364 | A | |
| | | | | entire text | | | |
| JP | 2023-31305 | A | 08 March 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007246626 A
- JP 2017218540 A
- WO 00056514 A
- JP H06134770 A
- JP S59124999 A
- JP 2018069473 A
- JP 2010095625 A

**Non-patent literature cited in the description**

- **R. F. FEDORS**. *Polym. Eng. Sci.*, 1974, vol. 14 (2), 147-154